(19) Europäisches Patentamt
European Patent Office
Office européen des brevets

(11) **EP 2 243 602 B1**

(12) # EUROPÄISCHE PATENTSCHRIFT

(45) Veröffentlichungstag und Bekanntmachung des Hinweises auf die Patenterteilung:
**15.05.2013 Patentblatt 2013/20**

(51) Int Cl.:
**B25J 9/16** (2006.01)     B23K 11/25 (2006.01)
**B23K 11/31** (2006.01)

(21) Anmeldenummer: **10003623.5**

(22) Anmeldetag: **31.03.2010**

(54) **Verfahren und Vorrichtung zur Regelung eines Manipulators**

Method and device for controlling a manipulator

Procédé et dispositif de commande d'un manipulateur

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **22.04.2009 DE 102009018403**
**14.10.2009 DE 102009049327**
**14.10.2009 DE 102009049329**

(43) Veröffentlichungstag der Anmeldung:
**27.10.2010 Patentblatt 2010/43**

(73) Patentinhaber: **KUKA Roboter GmbH**
**86165 Augsburg (DE)**

(72) Erfinder: **Hagenauer, Andreas**
**86316 Friedberg (DE)**

(74) Vertreter: **Schlotter, Alexander Carolus Paul et al**
**Wallinger Ricker Schlotter Tostmann**
**Patent- und Rechtsanwälte**
**Zweibrückenstrasse 5-7**
**80331 München (DE)**

(56) Entgegenhaltungen:
**EP-A2- 1 905 547        EP-A2- 2 000 268**
**WO-A1-2008/004487**

- **KOSUGE K, FURUTA K: "Kinematic and dynamic analysis of robot arm", 1985 IEEE INTERNATIONAL CONFERENCE ON ROBOTICS AND AUTOMATION 25-28 MARCH 1985 ST. LOUIS, MO, USA, 28. März 1985 (1985-03-28), Seiten 1039-1044, XP002672401, 1985 IEEE International Conference on Robotics and Automation (Cat. No. 85CH2152-7) IEEE Comput. Soc. Press Silver Spring, MD, USA ISBN: 0-8186-0615-0**

EP 2 243 602 B1

**Beschreibung**

Die vorliegende Erfindung betrifft ein Verfahren und eine Vorrichtung zur Regelung eines mehrachsigen Manipulators, insbesondere eines Roboters.

Heutige Industrieroboter sind überwiegend positionsgeregelt. Hierzu werden in einem Interpolator Soll-Gelenkstellungen generiert und durch Einzelgelenkregler in den einzelnen Antrieben des Roboters angefahren. Wird eine Soll-Position jedoch, beispielsweise aufgrund eines Hindernisses oder einer ungenauen Umweltmodellierung bei der Bahnplanung, nicht erreicht, erhöht eine reine Positionsregelung die Antriebskräfte so lange, bis entweder Stellgrößenbeschränkungen überschritten werden, was zum Abschalten der Steuerung führt, oder der Roboter die Soll-Position gewaltsam anfährt und dabei gegebenenfalls ein Hindernis, ein Bauteil, ein Werkzeug oder sich selbst beschädigt.

Ein anschauliches Beispiel ist das Punktschweißen mit einer Schweißzange: die Schweißelektroden sollen an vorgegebenen Stellen eines Bauteils mit einer vorgegebenen Anpresskraft an dieses angedrückt werden. Liegt das Bauteil jedoch nicht in der bei der Planung der Schweißpose zugrundegelegten Position, sondern ist beispielsweise in Schließrichtung der Schweißzange verschoben, würde ein rein positionsgeregelter Roboter die Schweißelektroden gewaltsam in die vorgegebenen Positionen drücken und dabei das Bauteil und die eine Elektrode beschädigen, während die andere gegebenenfalls keinen Kontakt mit dem Bauteil hat. Selbst wenn es nicht zur Beschädigung kommt, würden dem Schweißprozess nicht zuträgliche Kräfte auftreten, die die Qualität des Schweisspunktes bis zum Versagen vermindern könnte.

Um solche Probleme zu lösen, ist es bekannt, gezielte passive Nachgiebigkeiten in der Roboterstruktur vorzusehen, beispielsweise durch ein sogenanntes "Remote Center of Compliance". Aufgrund der aufgabenspezifischen Steifigkeits- und Nachgiebigkeitsrichtungen ist dies jedoch nicht für unterschiedliche Anwendungsfälle einsetzbar. Auch eine aktiv steuerbare Werkzeuganbindung, etwa eine schwimmend gelagerte Schweißzange, die mittels Druckluft oder Servomotoren in verschiedene Ausgleichslagen justiert werden kann, muss an den jeweiligen Anwendungsfall angepasst werden und erfordert ebenso wie die passive Nachgiebigkeit zusätzlichen gerätetechnischen Aufwand.

In der Forschung werden daher seit langem Kraft-Regelungen untersucht, wobei vorliegend auch antiparallele Kräftepaare, i.e. Drehmomente, verallgemeinernd als Kräfte bezeichnet werden, unter einer Kraft-Regelung als insbesondere auch eine sogenannte Kraft-Momenten-Regelung ("KMR") verstanden wird. Ein als "FTCtrl" ("force Roque control") industriell umgesetztes Konzept ist dabei die Aufspaltung in positions- und kraftgeregelte Teilräume durch eine Selektionsmatrix, ein anderes die parallele Positions- und Kraftregelung mit Überlagerung der jeweiligen Stellgrößen, ein weiteres die Impedanzregelung, bei der Positionen und Kräfte über Kraftgesetze, insbesondere Feder-Dämpfer-Masse-Modelle verknüpft werden. Einen Überblick gibt beipielsweise H.-B. Kuntze in "Regelungsalgorithmen für rechnergesteuerte Industrieroboter", Regelungstechnik, 1984, S. 215-226 oder A. Winkler in "Ein Beitrag zur kraftbasierten Mensch-Roboter-Interaktion", Dissertation, TU Chemnitz, 2006.

Die Umsetzung dieser Ansätze in der Praxis begegnet jedoch regelmäßig Schwierigkeiten. Beispielsweise erfordert eine Kraft-Regelung im kartesischen Raum, um eine Nachgiebigkeit längs einer kartesischen Richtung darzustellen, in obigem Anwendungsfall etwa längs der Schließrichtung der Schweißzange, einen hohen Rechenaufwand mit entsprechend trägem Regelverhalten. Auf der anderen Seite ist es bei der Kraftregelung aller Achsen problematisch, den jeweiligen Anteil der auf den Roboter wirkenden Kräfte aus den Motorströmen zu ermitteln, da die Kräfte aufgrund von Getriebeübersetzungen, Reibung und Rauschen nur ungenau rekonstruiert werden können.

Die EP 2000 268 A2 betrifft ein Steuerungsgerät für einen Roboter für Soft-Control-Applikationen. Es wird vorgeschlagen, bei einem Manipulator mit positions- und geschwindigkeitsgeregelten Achsen, die Bewegung wenigstens einer Achse abhängig von einer Bewegung einer nachgiebigen Achse durchzuführen. Genauer gesagt, wird eine Korrekturposition der Folgeachsen $\delta J2$- $\delta J6$, welche auf die Sollposition addiert wird, auf Basis zuvor berechneter Verfahrstrecken $\Delta J1$- $\Delta J6$ und einer erfassten, aktuellen Verfahrstrecke $\delta J1$ der Führungsachse J1 ermittelt. Die Nachgiebigkeit der Führungsachse wird durch eine Verringerung der Verstärkungsfaktoren des Positions- und des Geschwindigkeitsreglers erreicht.

Die EP 1 905 547 A2 betrifft ein Sof-Control-Verfahren für Industrieroboter, wobei der gesamte Roboter nachgiebig geregelt wird.

Der Artikel "Kinematic and dynamic analysis of robot arm". (K. Kosuge, K. Furuta), Proceedings 1985 IEEE ICRA, S.1039-1044, betrifft kinematische und dynamische Analysen eines Roboterarms, wobei die Analysen zum Design von Roboterarmen verwendet werden.

Aufgabe der vorliegenden Erfindung ist es daher, das Verhalten von Manipulatoren in der Praxis zu verbessern.

Diese Aufgabe wird durch ein Verfahren mit den Merkmalen des Anspruchs 1 gelöst. Anspruch 13 stellt eine Steuervorrichtung, Anspruch 14 bzw. 15 ein Computerprogramm bzw. ein Computerprogrammprodukt, insbesondere einen Datenträger oder ein Speichermedium, zur Durchführung eines Verfahrens nach Anspruch 1 unter Schutz. Die Unteransprüche betreffen vorteilhafte Weiterbildungen.

Die vorliegende Erfindung basiert auf folgender Überlegung: eine nachgebende Bewegung im kartesischen bzw. Arbeitsraum entspricht einer Bewegung in einer oder mehreren Bewegungsachsen, beispielsweise Drehgelenken oder Linearachsen, des Manipulators. Wenigstens eine dieser Achsen wird als Führungsachse bestimmt und nachgiebig geregelt. Weitere Achsen, vorzugsweise alle übrigen Achsen, werden steif geregelt, wobei jedoch ein Soll-Wert auf Basis eines Ist-Wertes der Führungsachse(n) bestimmt wird. Die nachgebende Bewegung im kartesischen Raum wird sozusagen über die führende(n) Achse(n) parametrisiert. Dann kann einerseits die Nachgiebigkeit durch die nachgiebige Regelung dieser Führungsachse(n) dargestellt und andererseits die gewünschte nachgebende Bewegung im kartesischen Raum durch die steifen Regelungen der weiteren Achsen sichergestellt werden, die der nachgebenden führenden Achse folgen.

Vorteilhaft kann das erfindungsgemäße Konzept die Verwendung einfacher, robuster, effizienter Regler für die Führungs- und weiteren Achsen ermöglichen und so gegenüber komplizierteren theoretischen Ansätzen zuverlässig und einfach umgesetzt werden.

Unter einer nachgiebigen Regelung wird vorliegend insbesondere eine Regelung verstanden, die unter einer Kraft, beispielsweise einer Führungskraft oder einer Kontaktkraft beim Auftreffen auf ein Hindernis, eine Bewegung, insbesondere ein Ausweichen bewirkt. Dieses Ausweichen erfolgt vorzugsweise in Abhängigkeit von Größe und/oder Richtung der Kraft. Die nachgiebige Regelung ist vorzugsweise als Einzelgelenkregelung der jeweiligen Führungsachse ausgebildet.

Insbesondere kann eine nachgiebige Regelung als Kraftregelung ausgebildet sein. Eine einwirkende Kraft kann hierzu beispielsweise direkt mittels eines Kraft- bzw. Kraft-Momenten-Sensors, vorzugsweise an einem Werkzeugflansch des Manipulators erfasst werden. Zusätzlich oder alternativ kann sie indirekt auf Basis von Deformationen des Manipulators, beispielsweise Biegungen seiner Glieder erfasst werden. Zusätzlich oder alternativ kann sie auf Basis einer Reaktionskraft in einem Antrieb des Manipulators erfasst werden, beispielsweise mittels eines dort angeordneten Kraft- bzw. Kraft-Momenten-Sensors. Die Reaktionskraft kann auch auf Basis der Kräfte ermittelt werden, die der Antrieb zusätzlich zu den Kräften aufbringen muss, die bei einer kontakt- bzw. kräftefreien Bahn auftreten, beispielsweise zusätzlich zu statischen Halte- oder dynamischen Kreisel- und Beschleunigungskräften. Solche Kräfte können insbesondere auf Basis eines Stromwertes eines Antriebselektromotors ermittelt werden. Denn die zur Bewegungsregelung aufgebrachten Motorströme sind, bereinigt um Gravitations-, Trägheits- und Reibungseffekte, im Wesentlichen linear zu den Reaktionskräften in den einzelnen Achsen. Dabei sei nochmals darauf hingewiesen, dass vorliegend auch ein Drehmoment verallgemeinernd als Kraft bezeichnet wird.

Die nachgiebige Regelung kann als indirekte Kraftregelung ausgebildet sein, insbesondere als Impedanzregelung. Gleichermaßen kann sie auch als direkte Kraftregelung ausgebildet sein, insbesondere als parallele Kraft- und Positionsregelung, bei der sowohl Abweichungen zwischen Soll- und Ist-Kräften als auch zwischen Soll- und Ist-Positionen berücksichtigt und beispielsweise entsprechende Stellgrößen superponiert werden.

Eine einfache Möglichkeit einer Kraftregelung besteht in einer Limitierung der Antriebskräfte der Führungsachse. Diese wird hierzu grundsätzlich positionsgeregelt, wobei ihre Antriebskraft, beispielsweise durch Begrenzung eines maximalen Soll-Motorstroms in einem Stromregelkreis eines Kaskadenreglers, jedoch auch bei größeren Soll-Ist-Abweichungen einen vorgegebenen Grenzwert nicht übersteigen kann. Solange eine auf diese Weise kraftgeregelte Achse einen Widerstand erfährt, der den vorgegebenen Grenzwert nicht übersteigt, versucht sie, ihre Soll-Position anzufahren. Übersteigt der Widerstand, beispielsweise aufgrund einer Kollision mit einem Hindernis, diesen Grenzwert, lässt sich die Achse verschieben und setzt dem nur eine Kraft entsprechend des Grenzwertes entgegen, sie ist somit nachgiebig geregelt.

Entsprechend wird unter einer steifen Regelung vorliegend insbesondere eine Regelung verstanden, die im Wesentlichen unabhängig von entgegenwirkenden Kräften eine vorgegebene Soll-Position anfährt bzw. unter einer Kraft, beispielsweise einer Führungskraft oder einer Kontaktkraft beim Auftreffen auf ein Hindernis, möglichst keine ausweichende Bewegung bewirkt. Dabei können natürlich Obergrenzen für die hierzu erforderlichen Stellkräfte berücksichtigt werden, um Beschädigungen zu verhindern. Die steife Regelung ist vorzugsweise als Einzelgelenkregelung der jeweiligen weiteren Achse ausgebildet.

Insbesondere kann eine steife Regelung als (reine) Positionsregelung ausgebildet sein. Unter einer Positions- bzw. Lageregelung wird dabei insbesondere auch eine Regelung verstanden, in der, beispielsweise in Form einer Kaskadenregelung, vorzugsweise mit Geschwindigkeits- und/oder Beschleunigungsvorsteuerung, eine Stellgröße, beispielsweise ein Motorstrom, auf Basis der Differenz zwischen Soll- und Ist-Positionen, deren Integralen und/oder zeitlichen Ableitungen bestimmt wird, beispielsweise eine ein- oder mehrfache Proportional(P)-, Differential(D)- und/oder Integral(I)-Regelung (P, PD, PI, PID).

In einer bevorzugten Ausführung wird eine Kraft, der der Manipulator nachgiebig ausweichen soll, und/oder eine Wirkungslinie, längs der der Manipulator nachgiebig ausweichen soll, im kartesischen bzw. Arbeitsraum, vorzugsweise vorab, vorgegeben, beispielsweise durch entsprechende Vektoren in einem raumfesten Inertialsystem.

Die vorgegebene Kraft kann beispielsweise eine Kontaktkraft sein, die der Manipulator längs der Wirkungslinie ausüben soll, etwa eine Anpresskraft einer Schweißzange längs ihrer Schließrichtung, und bei deren Überschreitung er längs der Wirkungslinie ausweichen soll.

Eine vorgegebene Wirkungslinie kann beispielsweise eine Folge von Lagen und Orientierungen des TCPs sein. Sie kann dann zum Beispiel durch einen parametrisierten sechsdimensionalen Vektor mit drei Lage- und drei Winkelkoordinaten im kartesischen Raum vorgegeben werden. Gleichermaßen sind auch Wirkungslinien möglich, die beispielsweise nur die Lagen oder nur die Orientierung des TCPs definieren und dementsprechend durch einen parametrisierten dreidimensionalen Vektor vorgegeben werden können. Auf der anderen Seite ist auch die Vorgabe einer komplexeren räumlichen Nachgiebigkeit, etwa längs einer Ebene oder einer anderen Hyperfläche oder innerhalb eines Hyperraums im Raum der Lagen und/oder Orientierungen oder dem Konfigurationsraum der Gelenkkoordinaten, möglich. All diese Geraden, Kurven, Flächen, Hyperflächen und -räume werden nachfolgend zur Vereinfachung verallgemeinernd als Wirkungslinien bezeichnet. Durch die Vorgabe einer Wirkungslinie im Sinne der vorliegenden Erfindung kann also beispielsweise eine Eben im kartesischen Raum, in der der TCP des Manipulators mit oder ohne Beibehaltung der Orientierung nachgiebig ausweichen soll, oder eine Kugel, innerhalb der der TCP bei einem nachgiebigen Ausweichen bleiben soll, vorgegeben werden.

Auf Basis einer Steuerbarkeit längs einer solchen Wirkungslinie und/oder auf Basis einer Beobachtbarkeit dieser Kraft können eine oder mehrere Bewegungsachsen des Manipulators als Führungsachse(n) bestimmt werden. Wie einleitend erläutert, bewirkt eine Kraft bzw. Bewegung längs einer Wirkungslinie im kartesischen Raum entsprechende Kraftkomponenten bzw. Bewegungen in einzelnen Achsen des Manipulators. Die Größe diese Komponenten bzw. Bewegungen kann beispielsweise ein Maß für die Steuerbarkeit längs der Wirkungslinie bzw. die Beobachtbarkeit der Kraft darstellen. D.h., eine Kraft, die aufgrund der Kinematik des Manipulators, insbesondere der wirksamen Hebelarme, Getriebeübersetzungen etc., in einem Antrieb eine größere Komponente einprägt, ist in dieser Achse besser beobachtbar. Verfährt der Manipulator bei Bewegung eines Antriebs um eine größere Strecke längs der Wirkungslinie, ist diese Wirkungslinie durch diese Achse besser steuerbar. Wird eine Führungsachse daher unter Berücksichtigung der Steuer- und/oder Beobachtbarkeit, beispielsweise als gewichtete Summe oder Straffunktion, gewählt, kann eine Kraft, gegenüber der der Manipulator nachgeben soll, bzw. eine Wirkungslinie, längs der der Manipulator nachgeben soll, mit dieser Führungsachse besonders gut parametrisiert werden.

Da sich die Kraftkomponenten bzw. Bewegungen und damit die Steuer- bzw. Beobachtbarkeit je nach aktueller Pose des Manipulators ändern können, ist in einer bevorzugten Ausführung vorgesehen, abhängig von einer Pose des Manipulators unterschiedliche Führungsachsen zu wählen.

Insbesondere, um die Kraftkomponenten bzw. Bewegungen und damit die Steuer- bzw. Beobachtbarkeit beurteilen zu können, wird in einer bevorzugten Ausführung die Kraft und/oder die Wirkungslinie aus dem kartesischen bzw. Arbeitsraum in den Gelenkraum transformiert, der durch die Wertebereiche der einzelnen Achsen definiert ist.

Diese Transformation ist ebenfalls von der Pose des Manipulators abhängig. Jedenfalls im Bereich kleiner Änderungen von einer Referenzpose kann die Transformation durch eine lineare TAYLOR-Entwicklung angenähert werden. Da eine solche lineare Transformation rechentechnisch effizient umzusetzen ist, wird in einer bevorzugten Ausführung die Transformation lokal, insbesondere für eine bestimmte Pose des Manipulators, linearisiert. Da eine solche Linearisierung in der Regel nur lokal gut approximiert, kann sie für verschiedene Posen durchgeführt werden. Durch Umschalten oder Interpolation der entsprechenden linearen Transformationen kann die Transformation auch für größere Arbeitsbereiche des Manipulators adaptiert werden.

In einer bevorzugten Ausführung hängt ein Soll-Wert der weiteren Achse linear von einem Ist-Wert der Führungsachse(n) ab. Insbesondere bei einer linearisierten Transformation wird eine kartesische Wirkungslinie in eine lineare Funktion in den Gelenkkordinaten transformiert, so dass eine Parametrisierung mit der Gelenkkordinate der Führungsachse(n) auf lineare Funktionen in den weiteren Achsen führt. Gleichermaßen können jedoch auch nichtlineare Funktionen zwischen Ist-Werten der Führungsachse(n) und Soll-Werten der weiteren Achsen gewählt werden. Diese können beispielsweise tabellarisch abgespeichert werden, wobei zwischen Tabellenwerten interpoliert werden kann. Ebenso eignen sich, ggf. durch die durch die Applikation vorgegebene Form der Wirkungslinie besonders begünstige Darstellungen in geeigneten endlichdimensionalen Funktionenräumen wie Polynome, Splines, endliche Fourier-Reihen, etc.

In einer bevorzugten Ausführung werden zunächst mehrere mögliche Wirkungslinien bestimmt. Beispielsweise können neben einer Geraden oder Ebene im kartesischen Raum, längs der der TCP unter Beibehaltung seiner Orientierung nachgeben soll, kollineare Geraden bzw. koplanare Ebenen, längs derer der TCP unter Änderung seiner Orientierung nachgeben soll, als weitere mögliche Wirkungslinien bestimmt werden. Dann kann eine dieser möglichen Wirkungslinien, vorzugsweise auf Basis einer Steuerbarkeit längs der Wirkungslinie und/oder auf Basis einer Beobachtbarkeit der Kraft, ausgewählt und als die Wirkungslinie vorgegeben werden, längs der der Manipulator nachgiebig ausweichen soll. Kann also beispielsweise eine Ausweichbewegung längs einer Geraden, bei der sich die Orientierung des TCPs ändert, in einer Achse besser gesteuert werden, wird in einer bevorzugten Ausführung, zum Beispiel durch einen Optimierer, diese Achse als Führungsachse gewählt.

Vorzugsweise entspricht die Anzahl der Führungsachsen der Anzahl der Freiheitsgrade der vorgegebenen Nachgiebigkeit bzw. der Dimension der Wirkungslinie, die diese Nachgiebigkeit beschreibt. Soll der TCP eines Manipulators beispielsweise unter Beibehaltung seiner Orientierung längs einer Geraden im kartesischen Raum nachgiebig sein, handelt es sich um eine eindimensionale Wirkungslinie, der TCP weist einen Freiheitsgrad auf. Dann kann eine Bewegungsachse als Führungsachse ausgewählt und die restlichen Achsen können mit dieser parametrisiert werden. Soll der TCP hingegen unter Beibehaltung seiner Orientierung längs einer Ebene im kartesischen Raum nachgiebig sein, handelt es sich um eine zweidimensionale Wirkungslinie bzw. Hyperfläche, der TCP weist zwei Freiheitsgrade auf. Dann können zwei Bewegungsachsen als Führungsachsen ausgewählt und die verbleibenden Achsen können mit diesen parametrisiert werden.

Ein Manipulator soll in manchen Anwendungsfällen nur abschnittsweise nachgiebig sein. So soll beispielsweise ein Industrieroboter kontaktfreie Bahnen, zum Beispiel zum Anfahren einer Ausgangspose, steif und mit hoher Präzision ausführen, und sich erst bei Kontakt mit der Umgebung, beispielsweise durch Schließen einer Schweißzange, in einer vorgegebenen Richtung nachgiebig verhalten. Daher wird in einer bevorzugten Ausführung wahlweise zwischen einer nachgiebigen Regelung wenigstens einer Führungsachse und einer steifen Regelung aller Bewegungsachsen umgeschaltet.

Weitere Vorteile und Merkmale ergeben sich aus den Unteransprüchen und den Ausführungsbeispielen. Hierzu zeigt, teilweise schematisiert:

Fig. 1:    einen Roboter mit einer Steuervorrichtung nach einer Ausführung der vorliegenden Erfindung; und

Fig. 2:    die Abarbeitung eines Verfahrens nach einer Ausführung der vorliegenden Erfindung durch die Steuervorrichtung nach Fig. 1.

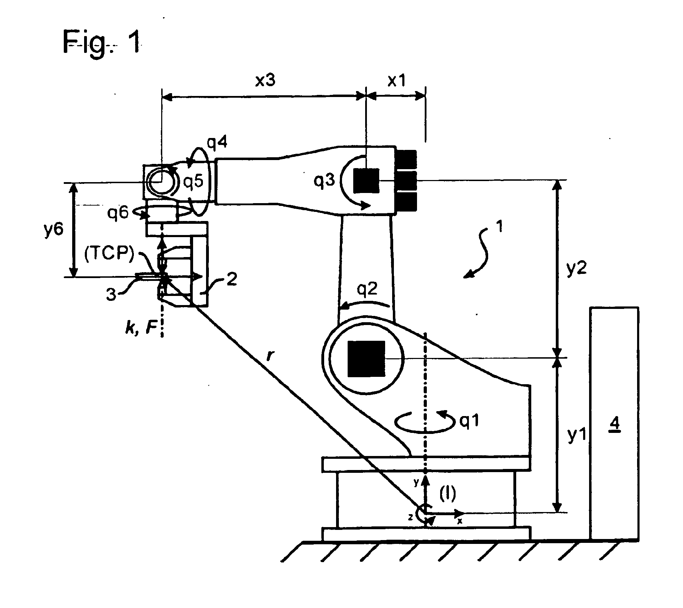

Fig. 1 zeigt einen sechsachsigen Knickarmroboter 1 in einer Grundstellung, in der seine sechs Achs- bzw. Gelenkwinkel q1, q2,...q6 den Wert Null aufweisen. Zur Vereinfachung sei angenommen, dass in den Achsen 1, 4 und 6 keine Bewegung stattfindet, so dass nachfolgend nur eine ebene Bewegung und die Gelenkkoordinaten q2, q3 und q5 betrachtet werden, die über die jeweiligen Getriebeübersetzungen die entsprechenden Drehlagen der Antriebsmotoren bestimmen. Dann lautet der Vektor x des Werkzeugreferenzsystems TCP einer Schweißzange 2, die zwei Bleche 3 punktschweißen soll, mit den in Fig. 1 eingezeichneten Achsabständen x1,...y6 im basisfesten Inertialsystem I:

$$\mathbf{x} = \mathbf{x}(\mathbf{q}) = \begin{bmatrix} r_x \\ r_y \\ \varphi \end{bmatrix} = \begin{bmatrix} -x1 - y2\cdot\sin(q2) - x3\cdot\cos(q2+q3) + y6\cdot\sin(q2+q3+q5) \\ y1 + y2\cdot\cos(q2) - x3\cdot\sin(q2+q3) - y6\cdot\cos(q2+q3+q5) \\ q2+q3+q5 \end{bmatrix} \quad (1)$$

mit den Komponenten $r_x$, $r_y$ des Ortsvektors $r$ zum TCP sowie dem EULER-Winkel $\varphi$ um die z-Achse. Die Jacobimatrix lautet lokal in der in Fig. 1 dargestellten Grundpose:

$$J(q=0) = \frac{\partial x}{\partial q}\bigg|_{q=0} = \begin{bmatrix} -y2+y6 & y6 & y6 \\ -x3 & -x3 & 0 \\ 1 & 1 & 1 \end{bmatrix} (2).$$

Der Roboter 1 soll in der $\gamma$-Richtung des Inertialsystems y nachgiebig sein, so dass sich die Schweißzange 2 beim Anfahren der Bleche 3 mit den Schweißelektroden in dieser Richtung zentrieren kann. Hierzu soll der TCP des Roboters längs der kartesischen Geraden

$$\underbrace{\begin{bmatrix} -x1-x3 \\ y1+y2-y6 \\ 0 \end{bmatrix}}_{s} + \lambda\cdot\underbrace{\begin{bmatrix} 0 \\ 1 \\ 0 \end{bmatrix}}_{k} \quad (3)$$

maximal eine Kraft $F_{max}$

$$\begin{bmatrix} 0 \\ F_{\mathrm{max}} \\ 0 \end{bmatrix} \underbrace{\quad}_{F_{\mathrm{max}}} (4)$$

aufbringen.

Diese Gerade **s** + λ**k** und maximale Kontaktkraft $F_{\mathrm{max}}$ können nach (2) bis (4) und den in der Robotik allgemein bekannten Identitäten Q = J$^T$ *F und J * dq = dx lokal um den Punkt s in den Raum der Gelenkkordinaten **q** = [q2, q3, q5]$^T$ transformiert werden:

$$\mathbf{s} + \lambda \cdot \mathbf{k} \rightarrow \begin{bmatrix} 0 \\ -\lambda/x3 \\ \lambda/x3 \end{bmatrix} =: \underbrace{\begin{bmatrix} 0 \\ \lambda' \\ -\lambda' \end{bmatrix}}_{q_l}$$

$$\mathbf{F}_{\mathrm{max}} \rightarrow \underbrace{\begin{bmatrix} -x3 \cdot F_{\mathrm{max}} \\ -x3 \cdot F_{\mathrm{max}} \\ 0 \end{bmatrix}}_{Q} \qquad (5)$$

Eine Kraft F längs der Geraden **s** + λ**k** erzeugt im Gelenk 5 aufgrund des verschwindenden Hebelarmes kein Drehmoment (Q$_z$=0), so dass die fünfte Achse zur Kraft-Momenten-Regelung aufgrund schlechter Beobachtbarkeit nicht geeignet ist. Auf der anderen Seite verfährt die zweite Achse nicht, so dass die dritte Achse bezüglich der Wirkungslinie **s** + λ**k** eine bessere Steuerbarkeit aufweist.

Daher wird die dritte Achse als eine führende Achse ausgewählt und die kartesische Gerade, längs der der Roboter 1 nachgiebig sein soll, mit dem Gelenkwinkel q3 parametrisiert. Auf diese Weise wird einerseits eine ausreichend große Führungsgröße erreicht. Auf der anderen Seite kann die Kontaktkraft gut auf Basis des im Antriebsmotor der dritten Achse erzeugten Drehmomentes erfasst werden.

Hat der Roboter 1 mit seinem TCP die in Fig. 1 dargestellte Startpose angefahren, wird daher nun die dritte Achse nachgiebig geregelt. Dies kann beispielsweise dadurch erfolgen, dass ihr Soll-Strom in einer Kaskaden-Positionsregelung, die versucht, die Startposition mit q3$_s$ = 0 als Sollposition zu halten, derart begrenzt wird, dass ein am Getriebeabtrieb erzeugtes Drehmoment von einem Drehmoment zur Kompensation der Massenkräfte um maximal ±x3·F$_{\mathrm{max}}$ abweicht, der Roboter einer Störbewegung aus der Startpose in dieser Achse also maximal ein Drehmoment von x3·F$_{\mathrm{max}}$ entgegensetzt. Natürlich sind auch andere Nachgiebigkeitsregelungen der dritten Achse, beispielsweise eine parallele Kraft-Positions-Regelung, in der Stellgrößen von Kraft- und Positionsreglern überlagert werden, oder eine Impedanzregelung möglich. Ein Istwert der am TCP angreifenden Kraft längs der vorgebenenen kartesischen Geraden kann beispielsweise aus dem Drehmoment ermittelt werden, das die Kraft auf den Antrieb der dritten Achse aufprägt und zum Beispiel aus den Motorströmen, durch einen entsprechenden Kraft- oder Kraft-Momentensensor, beispielsweise am Werkzeugflansch des Roboters 1, oder elastischen Verformungen beispielsweise seines Armes ermittelt werden kann.

Die anderen Achsen, im Ausführungsbeispiel insbesondere die zweite und fünfte Achse, werden hingegen steif bzw. positionsgeregelt. Hierzu kann beispielsweise ein Gelenkwinkel q2 bzw. q5 und/oder eine Gelenkwinkelgeschwindigkeit dq2/dt bzw. dq5/dt, zum Beispiel mittels Tachogeneratoren, Resolver oder inkrementale Drehgeber, erfasst, rückgeführt und in einer Positions-Geschwindigkeits-Strom-Kaskadenregelung einem Soll-Wert q2$_s$ bzw. q5$_s$ nachgeführt werden.

Erfindungsgemäß wird dieser Soll-Wert für die positionsgeregelte zweite und fünfte Achse auf Basis des Ist-Wertes q3$_{\mathrm{mess}}$ der nachgiebig geregelten dritten Achse bestimmt. Nach (5) können die Soll-Wert q2$_s$ und q5$_s$ beispielsweise als

$$q2_s = 0 \cdot q3_{mess},$$
$$q5_s = -q3_{mess} \qquad (6)$$

vorgegeben werden.

Schließt nun der Roboter 1, ausgehend von der in Fig. 1 dargestellten Startposition, seine Schweißzange 2 zum Punktschweißen des Bleche 3, kann es, beispielsweise aufgrund einer ungenauen Lagerung der Bleche 3, einer ungenauen Positionierung seines TCPs, oder Blechdickentoleranzen, sein, dass die Bleche nicht im Arbeitspunkt TCP der Schweißzange 2 liegen. Dies führt beim Schließen der Zange zu einer Reaktionskraft $F$ längs der kartesischen Geraden $s + \lambda k$, d.h. in Schließrichtung der Schweißzange 2.

Aufgrund der nachgiebigen Regelung der dritten Achse kann der Roboter in dieser Richtung ausweichen. Denn sobald das aufgrund der Reaktionskraft $F$ in der dritten Achse eingeprägte Drehmoment den zulässigen Wert $\pm x3\, F_{max}$ überschreitet, steigt der Sollstrom im Motorregler trotz Positionsabweichung nicht mehr weiter an und der Roboter 1 weicht unter der Reaktionskraft in seiner dritten Achse aus.

Diese Ausweichbewegung, d.h. die gemessenen Ist-Werte des Gelenkwinkels $q3_{mess}$, führt aufgrund ihrer steifen Positionsregelungen zu einer entsprechenden Nachführung in der zweiten und fünften Achse. Sie folgen der Ausweichbewegung der dritten Achse dabei derart, dass der TCP sich längs der kartesischen Geraden $s + \lambda k$, d.h. in Schließrichtung der Schweißzange 2 verschiebt. Auf diese Weise zentriert sich die Schweißzange 2 mittels einfacher, robuster und schneller Regler.

Wie aus dem Ausführungsbeispiel klar wird, verschiebt sich der TCP bei einer linearen Abhängigkeit der Soll-Werte der positionsgeregelten Achsen vom Ist-Wert der führenden Achse nach (6) im Allgemeinen nur näherungsweise längs einer Geraden im kartesischen bzw. Arbeitsraum. Dies kann jedoch beim Anwendungsfall des Punktsweißens mit entsprechend kleinen Zustellwegen von in der Regel 1 bis 2 cm bereits ausreichend sein.

Gleichwohl kann das erfindungsgemäße Verfahren allgemein auch für größere Bahnen genutzt werden, indem beispielsweise die Linearisierung, insbesondere die Auswertung der Jacobimatrix gemäß (2), abschnittsweise bzw. für verschiedene Posen des Roboters 1 wiederholt und an die geänderte Kinematik angepasst wird. Dabei kann gegebenenfalls auch die führende Achse gewechselt werden. Eine weitere Möglichkeit für größere Bahnen ist, statt der Approximation der Wirkungslinie durch eine Gerade im Gelenkraum, die über die führende Achse parametriert wird (d.h. die im Ausführungsbeispiel gezeigte Linearisierung), die gewünschte Wirkungslinie im kartesischen Raum durch eine Approximation höherer Ordnung im Gelenkraum darzustellen, wobei wiederum vorzugsweise eine Darstellung gewählt werden sollte, in der die folgenden Achsen als Funktion der führenden Achse erscheinen.

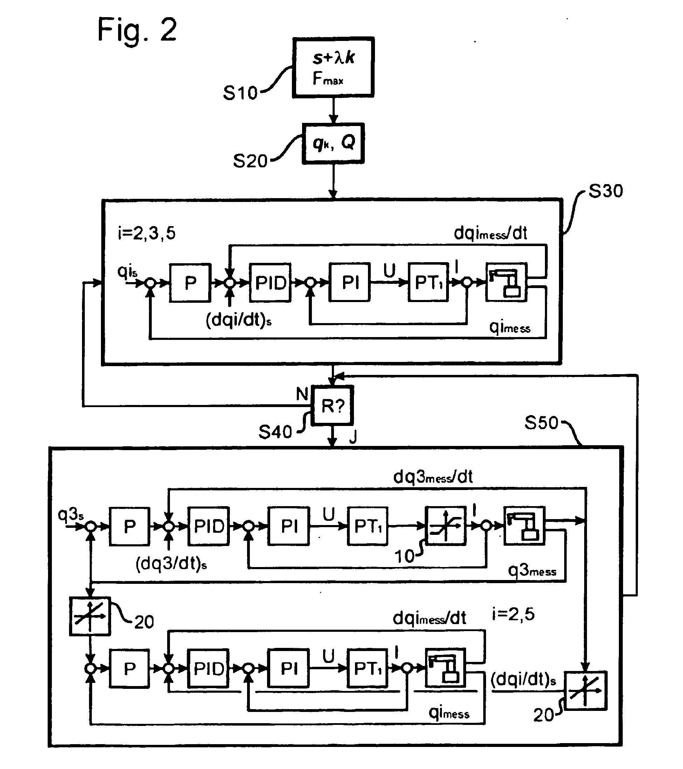

Fig. 2 veranschaulicht eine entsprechende Reglung, die beispielsweise in der in einem Steuerschrank 4 angeordneten Robotersteuerung implementiert sein kann.

In einem ersten Schritt S10 werden, vorzugsweise offline vorab, die kartesische Gerade $s + \lambda k$ im Arbeitsraum, längs der der Roboter nachgiebig sein soll, sowie Regelparameter, beispielsweise eine Maximalkraft $F_{max}$, ab der der Roboter ausweichen soll, vorgegeben.

Aus diesen werden in einem Schritt S20, gegebenenfalls für mehrere Posen und vorzugsweise linearisiert, die zugehörigen Gelenkwinkel $q_k$ und Drehmomente $Q$ ermittelt. Auf Basis der Beobachtbarkeit einer Kraft längs der kartesischen Geraden, i.e. der Größe des durch diese im Antriebsmotor eingeprägten Drehmomentes, und der Steuerbarkeit, i.e. der Größe des Verstellweges der jeweiligen Achse beim Verfahren längs der kartesischen Geraden, wird eine führende Achse, vorliegend die dritte Achse ausgewählt.

Der Roboter 1 fährt mit einer reinen Positionsregelung aller Achsen 2, 3, 5 seine Startpose an. Hierzu ist in Schritt S30 eine Kaskadenregelung für die einzelnen Achsen i = 2, 3 und 5 mit einem Proportional-Positions-Regler, einer Geschwindigkeitsvorsteuerung, einem PID-Regler und einem Proportional-Integral-Motor- bzw. Stromregler angedeutet.

Sobald der Roboter 1 seine Startpose angefahren hat, wird auf die erfindungsgemäße Regelung umgeschaltet (S40: "J").

In dieser wird die dritte Achse nachgiebig geregelt. Hierzu ist in Schritt S50 eine Soll-Strombegrenzung 10 angedeutet. Die übrigen Achsen i = 2, 5 werden positionsgeregelt, wobei ihre Soll-Werte sich jedoch nicht mehr aus dem Interpolator der Robotersteuerung 4, sondern aus den Ist-Werten der dritten Achse ergeben, wie ebenfalls in Schritt S50 durch das Glied 20 angedeutet.

Sobald der Punktschweißvorgang beendet ist, kehrt die Regelung in eine reine Positionsregelung für alle Achsen zurück (S40: "N"). Dabei wird vorzugsweise ein Soll-Ist-Abgleich der Achspositionen durchgeführt.

Im obigen Ausführungsbeispiel behält der TCP bei einem Nachgeben längs der Gerade $s + \lambda k$ lokal seine Orientierung bei ($\varphi = q2 + q3 + q5 = 0$). Gibt man diese Forderung auf, kann aufgrund des Fortfalls der dritten Zeile in (2) eine andere Wirkungslinie, beispielsweise durch

$$q3_s = -q2_{mess},$$
$$q5_s = \frac{y2}{y6} \cdot q2_{mess} \qquad (7)$$

parametrisiert werden. Weist eine Achse diesbezüglich eine bessere Steuer- und/oder Beobachtbarkeit auf als die dritte Achse bezüglich (6), kann, zum Beispiel durch einen Optimierer, der die Steuer- und Beobachtbarkeit als Gütekriterien berücksichtigt, diese Achse, in (7) beispielsweise die zweite Achse, als Führungsachse bestimmt und die Wirkungslinie gemäß (7) vorgegeben werden.

Bezugszeichenliste

1  Roboter
2  Schweißzange
3  Blech
4  Steuerschrank

q1,...q6  Gelenkwinkel
I  Inertialsystem
TCP  Tool Center Point (Werkzeugreferenzsystem)
x1,...y6  Achsabstände

**Patentansprüche**

1. Verfahren zur Regelung eines mehrachsigen Manipulators, insbesondere eines Roboters (1), mit den Schritten:

   nachgiebige Regelung (S50) wenigstens einer Führungsachse; und
   steife Regelung (S50) wenigstens einer weiteren Achse;
   **dadurch gekennzeichnet, dass**
   ein Soll-Wert ($q2_s$, $q5_s$) der wenigstens einen weiteren Achse auf Basis eines IstWertes ($q3_{mess}$) der Führungsachse bestimmt wird, und eine Kraft ($F_{max}$), der der Manipulator nachgiebig ausweichen soll, und/oder eine Wirkungslinie ($s+\lambda \cdot k$), längs der der Manipulator nachgiebig ausweichen soll, insbesondere im Arbeitsraum, vorgegeben wird; und wahlweise zwischen einer nachgiebigen und einer steifen Regelung umgeschaltet wird (S40); wobei die Wirkungslinie eine Folge von Lagen und Orientierungen des TCPs, eine Gerade, eine kurre, eine Fläche, eine Hyperfläche oder ein Hyperraum sein kann.

2. Verfahren nach Anspruch 1, **dadurch gekennzeichnet, dass** mehrere mögliche Wirkungslinien bestimmt werden und, insbesondere auf Basis einer Steuerbarkeit längs der Wirkungslinien und/oder auf Basis einer Beobachtbarkeit der Kraft, eine von diesen ausgewählt und als Wirkungslinie ($s+\lambda \cdot k$) vorgegeben wird, längs der der Manipulator nachgiebig ausweichen soll.

3. Verfahren nach einem der vorhergehenden Ansprüche, **dadurch gekennzeichnet, dass** wenigstens eine Bewegungsachse des Manipulators auf Basis einer Steuerbarkeit längs der vorgegebenen Wirkungslinie und/oder auf Basis einer Beobachtbarkeit der Kraft als eine Führungsachse bestimmt wird.

4. Verfahren nach einem der vorhergehenden Ansprüche 1 bis 3, **dadurch gekennzeichnet, dass** die Kraft und/oder die Wirkungslinie in den Gelenkraum transformiert wird (S20).

5. Verfahren nach Anspruch 4, **dadurch gekennzeichnet, dass** die Transformation lokal linearisiert und/oder adaptiert wird.

6. Verfahren nach einem der vorhergehenden Ansprüche, **dadurch gekennzeichnet, dass** eine nachgiebige Regelung als Kraftregelung ausgebildet ist: und/oder dass eine steife Regelung als Positionsregelung ausgebildet ist.

7. Verfahren nach Anspruch 6, **dadurch gekennzeichnet, dass** eine nachgiebige Regelung als indirekte Kraftregelung, insbesondere als Impedanzregelung, oder als direkte Kraftregelung, insbesondere als parallele Kraft- und Positionsregelung, ausgebildet ist.

8. Verfahren nach einem der vorhergehenden Ansprüche 6 bis 7, **dadurch gekennzeichnet, dass** zur Kraftregelung eine auf den Manipulator einwirkende Kraft auf Basis einer Reaktionskraft in einem Antrieb wenigstens einer Führungsachse, insbesondere auf Basis eines Stromwertes eines Antriebselektromotors, ermittelt wird.

9. Verfahren nach einem der vorhergehenden Ansprüche, **dadurch gekennzeichnet, dass** ein Soll-Wert einer weiteren Achse linear oder nichtlinear von einem Ist-Wert 5 wenigstens einer Führungsachse abhängt (($q2_s = 0 \cdot q3_{mess}$, $q5_s = -q3_{mess}$); ($q3_s = - q2_{mess}$; $q5_s = (y2/y6)q2_{mess}$)).

10. Verfahren nach einem der vorhergehenden Ansprüche, **dadurch gekennzeichnet, dass** abhängig von einer Pose des Manipulators unterschiedliche Führungsachsen gewählt werden.

11. Steuervorrichtung (4) für einen Manipulator, insbesondere einen Roboter (1), mit:

   einem nachgiebigen Regler für wenigstens eine Führungsachse; und
   einem steifen Regler für wenigstens eine weitere Achse;

   **dadurch gekennzeichnet, dass**
   die Regler zur Durchführung eines Verfahrens nach einem der vorhergehenden Ansprüche eingerichtet sind.

12. Computerprogramm, dass ein Verfahren nach einem der Ansprüche 1 bis 10 ausführt, wenn es in einer Steuervorrichtung nach Anspruch 11 abläuft.

13. Computerprogrammprodukt mit Programmcode, der auf einem maschinenlesbaren Träger gespeichert ist und ein Computerprogramm nach Anspruch 12 umfasst.

## Claims

1. A method for controlling of a multi-axis manipulator, in particular a robot (1), comprising the steps:

   compliant control (S50) of at least one leading axis; and
   stiff control (S50) of at least one further axis;

   **characterized in that**,
   a demand-value ($q2_s$, $q5_s$) of said at least one further axis is determined on the basis of an actual value ($q3_{mess}$) of the leading axis, and a force ($F_{max}$), to which the manipulator is to dodge compliantly and/or a line of action ($s+ \lambda \cdot k$), lengthwise to which the manipulator is to dodge compliantly, is determined, in particular in the working space; and selectively switching between a compliant and a stiff control (S40); wherein the line of action can be an order of locations and orientations of the TCPs, a straight line, a curve, a surface, a hyper-surface or a hyper-space.

2. A method according to claim 1, **characterized in that** a plurality of possible lines of action are determined and one of these is selected, in particular on the basis of a controllability lengthwise of a line of action and/or on the basis of an observability of a force, and is provided as line of action ($s+ \lambda \cdot k$), lengthwise that the manipulator is to dodge compliantly.

3. A method according to one of the preceding claims, **characterized in that** at least one motion axis of the manipulator is determined as leading axis on the basis of a controllability lengthwise of the provided line of action and/or on the basis of an observability of the force.

4. A method according to one of the preceding claims 1 to 3, **characterized in that** the force and/or the line of action is transformed to joint spaces (20).

5. A method according to claim 4, **characterized in that** the transformation is linearized locally and/or adapted.

**6.** A method according to one of the preceding claims, **characterized in that** a compliant control is formed as force control; and/or that a stiff control is formed as position control.

**7.** A method according to claim 6, **characterized in that** a compliant control is formed as indirect force control, in particular as impedance control, or is formed as direct force control, in particular as parallel force and position control.

**8.** A method according to one of the preceding claims 6 to 7, **characterized in that** for the force control a force exerted on the manipulator is determined on the basis of a reaction force in a drive of at least one leading axis, in particular on the basis of a current value of an electrical drive motor.

**9.** A method according to one of the preceding claims, **characterized in that** a demand-value of a further axis is dependent linearly or non-linearly on an actual value of at least one leading axis (($q2_s = 0 \cdot q3_{mess}$, $q5_s = -q3_{mess}$); ($q3_s = - q2_{mess}$; $q5_s = (y2/y6)q2_{mess}$)).

**10.** A method according to one of the preceding claims, **characterized in that**, different leading axes are selected dependent on a pose of the manipulator.

**11.** A control apparatus (4) for a manipulator, in particular a robot (1), comprising:

> a compliant controller for at least one leading axis; and
> a stiff controller for at least one further axis;

> **characterized in that**,
> the controller is arranged for carrying out a method according to one of the preceding claims.

**12.** A computer program that performs a method according to one of the claims 1 to 10, if it runs in a control apparatus according to claim 11.

**13.** A computer program product with program code that is saved on a machine-readable carrier and comprises a computer program according to claim 12.


**Revendications**

**1.** Procédé de commande d'un manipulateur à plusieurs axes, en particulier d'un robot (1), comprenant les étapes de :

> commande souple (S50) d'au moins un axe de guidage ; et
> commande rigide (S50) d'au moins un autre axe ;

> **caractérisé en ce que**
> une valeur théorique ($q2_s$, $q5_a$) du ou des autres axes est définie sur la base d'une valeur réelle ($q3_{mess}$) de l'axe de guidage, et une force ($F_{max}$) le long de laquelle le manipulateur devra dévier de façon souple, et/ou une ligne d'action ($s+\lambda \cdot k$), le long de laquelle le manipulateur devra dévier de façon souple, en particulier dans la chambre de travail, sont prédéfinis ; et on passe sélectivement d'une commande souple à une commande rigide (S40), la ligne d'action pouvant être une succession de positions et d'orientations du TCP, une ligne droite, une courbe, une surface, un hyperplan ou une hyperchambre.

**2.** Procédé selon la revendication 1, **caractérisé en ce que** plusieurs lignes d'action possibles sont définies et, en particulier sur la base d'une maniabilité le long des lignes d'action et/ou sur la base d'une observation de la force, l'une d'entre elles est choisie et prédéfinie en tant que ligne d'action ($s+\lambda \cdot k$) le long de laquelle le manipulateur devra dévier de manière souple.

**3.** Procédé selon l'une quelconque des revendications précédentes, **caractérisé en ce qu'**au moins un axe de déplacement du manipulateur est défini en tant qu'axe de guidage sur la base d'une maniabilité le long de la ligne d'action prédéfinie et/ou sur la base d'une observation de la force.

**4.** Procédé selon l'une quelconque des revendications précédentes 1 à 3, **caractérisé en ce que** la force et/ou la ligne d'action sont transformées dans la chambre articulée (S20).

5. Procédé selon la revendication 4, **caractérisé en ce que** la transformation est linéarisée localement et/ou adaptée.

6. Procédé selon l'une quelconque des revendications précédentes, **caractérisé en ce qu'**une commande souple est conçue comme une commande de force, et/ou **en ce qu'**une commande rigide est conçue comme une commande de position.

7. Procédé selon la revendication 6, **caractérisé en ce qu'**une commande souple est conçue comme une commande de force indirecte, en particulier comme une commande d'impédance, ou comme une commande de force directe, en particulier comme une commande de force et de position parallèle.

8. Procédé selon l'une quelconque des revendications précédentes 6 à 7, **caractérisé en ce que** pour la commande de force, une force agissant sur le manipulateur est déterminée sur la base d'une force de réaction dans un entraînement d'au moins un axe de guidage, en particulier sur la base d'une valeur de courant d'un moteur électrique d'entraînement.

9. Procédé selon l'une quelconque des revendications précédentes, **caractérisé en ce qu'**une valeur théorique d'un autre axe dépend linéairement ou non d'une valeur réelle d'au moins un axe de guidage (($q2_S=0 \cdot q3_{mess}$, $q5_8=-q3_{mess}$) ; ($q3_S=-q2_{mess}$ ; $q5S=(y2/y6)q2_{mess}$)).

10. Procédé selon l'une quelconque des revendications précédentes, **caractérisé en ce que** différents axes de guidage sont choisis en fonction d'une pose du manipulateur.

11. Dispositif de commande (4) pour un manipulateur, en particulier un robot (1), comprenant :

   un dispositif de commande souple pour au moins un autre axe de guidage ; et
   un dispositif de commande rigide pour au moins un autre axe ;

   **caractérisé en ce que**
   les dispositifs de commande sont conçus pour mettre en oeuvre un procédé selon l'une quelconque des revendications précédentes.

12. Programme informatique qu'un procédé selon l'une quelconque des revendications 1 à 10 exécute lorsqu'il se déroule dans un dispositif de commande selon la revendication 11.

13. Produit-programme informatique comprenant un code programme mémorisé sur un support pouvant être lu par une machine et comprenant un programme informatique selon la revendication 12.

# Fig. 1

# Fig. 2

**IN DER BESCHREIBUNG AUFGEFÜHRTE DOKUMENTE**

**In der Beschreibung aufgeführte Patentdokumente**

- EP 2000268 A2
- EP 1905547 A2

**In der Beschreibung aufgeführte Nicht-Patentliteratur**

- **H.-B. KUNTZE.** Regelungsalgorithmen für rechnergesteuerte Industrieroboter. *Regelungstechnik,* 1984, 215-226
- **A. WINKLER.** Ein Beitrag zur kraftbasierten Mensch-Roboter-Interaktion. *Dissertation,* 2006
- **K. KOSUGE ; K. FURUTA.** Kinematic and dynamic analysis of robot arm. *Proceedings 1985 IEEE ICRA,* 1985, 1039-1044